# FASCICULE DE BREVET EUROPEEN

(11) **EP 3 653 355 B1**
(45) Date de publication et mention de la délivrance du brevet: **02.06.2021**
(21) Numéro de dépôt: 19207477.1
(22) Date de dépôt: 06.11.2019
(51) Int. Cl.: B27H 3/02, B27H 5/00, B27H 5/02, B65D 8/00, B65D 6/00, B65D 6/34

(54) **CONTENANT EN BOIS SENSIBLEMENT SPHÉRIQUE POUR LA MATURATION DE BOISSONS FERMENTÉES OU LA FERMENTATION DE MOÛTS SUCRÉS**
BEHÄLTER AUS IM WESENTLICHEN KUGELFÖRMIGEM HOLZ ZUR REIFUNG VON VERGÄRTEN GETRÄNKEN ODER GÄRUNG VON SÜSSEN MOSTEN
SUBSTANTIALLY SPHERICAL WOODEN CONTAINER FOR AGEING FERMENTED DRINKS OR FERMENTING SUGAR MUSTS

(30) Priorité: 19.11.2018 FR 1871621
(43) Date de publication de la demande: 20.05.2020
(73) Titulaire: Seguin Moreau&Co, 16100 Merpins (FR)
(72) Inventeur: VERDIER, Benoit, 16200 GONDEVILLE (FR); COMOY, Jean-Baptiste, 16100 COGNAC (FR); ANDRIEUX, Benoit, 16290 SAINT SATURNIN (FR)
(74) Mandataire: Chevalier, Renaud Philippe

(56) Documents cités:
- WO-A1-2011/047187
- FR-A1- 3 035 377
- US-A- 2 289 245
- US-A- 4 073 955

## Description

La présente invention concerne un outil de vinification et d'élevage selon le préambule de la revendication 1, et un procédé d'assemblage selon la revendication 12. Un tel outil est connu de FR3035377 A1.

La maturation des boissons fermentées comme des vins et spiritueux, dans des contenants en bois, généralement en chêne, mais aussi dans d'autres essences de bois comme le châtaignier ou l'acacia, est une étape importante dans l'élaboration de ces boissons. Au cours de l'élevage en fût, le tanin et les composés aromatiques du bois se diffusent dans le vin en modifiant son arôme et son goût.

De plus une lente pénétration d'oxygène au travers du bois constituant le contenant réalise une oxydation ménagée des substances présentes dans le vin ou le spiritueux, modifiant favorablement ses caractéristiques organoleptiques telles que sa couleur, son goût ou son odorat.

Un type de contenant en bois connu, présenté notamment par le document FR-A1 -2997889, comporte une forme extérieure sensiblement sphérique formée par un ensemble de douelles cintrées disposées autour d'un axe principal définissant deux pôles de la sphère, qui se rejoignent de chaque côté près de ces pôles.

L'ensemble des douelles est serré par des cerclages disposés dans des plans transversaux, insérés dans l'épaisseur des planches de bois, afin d'obtenir une pression importante entre les faces latérales des douelles juxtaposées pour réaliser une étanchéité.

D'une manière générale la sphère, ou une forme proche présentant une courbure continue et un axe principal de symétrie, oblong ou ovoïde par exemple, est une forme présentant un rapport élevé entre le volume intérieur et la surface extérieure, donnant une bonne inertie thermique en limitant les variations de température, ce qui apporte les meilleures conditions de maturation des boissons fermentées.

De plus une rotation périodique de la sphère, facile à mettre en œuvre, permet d'utiliser toutes les surfaces intérieures du bois pour une mise en contact avec la boisson, et de mettre en suspension dans la phase liquide des dépôts au fond du contenant comme des lies ou du marc, afin d'augmenter les échanges entre eux.

Par ailleurs la sphère en bois présente une forme originale avec un bel aspect qui peut être mis en valeur.

Toutefois le procédé d'assemblage du contenant sphérique présenté par ce document, est difficile à mettre en œuvre. En particulier le cintrage important des douelles pour réaliser la forme sphérique donne des contraintes élevées sur les cerclages venant autour de l'axe, notamment près des pôles de la sphère. Il faut un nombre de cerclages important, et une tension élevée qui est difficile à mettre en œuvre.

La présente invention a notamment pour but d'éviter ces inconvénients de la technique antérieure.

Elle propose à cet effet un contenant en bois notamment pour la maturation de boissons fermentées ou la fermentation de moûts sucrés, présentant une courbure continue et un axe principal de symétrie définissant deux pôles, comprenant des pièces de bois allongées suivant des plans méridiens, réparties autour de l'axe et serrées entre elles par leurs faces latérales pour assurer une étanchéité, ce contenant étant remarquable en ce que les pièces de bois forment au niveau de chaque pôle un perçage centré sur l'axe recevant chacun un fond, et en ce que les deux fonds sont reliés entre eux par des tirants intérieurs au contenant.

Un avantage de ce contenant est que de manière simple les tirants maintiennent facilement une force axiale importante entre les deux fonds, ces fonds transmettant à leur tour une force de serrage axiale aux extrémités des pièces de bois, qui se transforme une pression entre elles sur leurs faces latérales. On obtient facilement une pression élevée et une étanchéité entre les pièces de bois, en particulier près des pôles du contenant.

De plus la fabrication du contenant qui peut être par exemple sphérique, oblong ou ovoïde, comprenant la mise en place de la pression sur les faces latérales des pièces de bois, est facilitée par un serrage final des tirants.

Le contenant en bois selon l'invention peut comporter de plus une ou plusieurs des caractéristiques suivantes, qui peuvent être combinées entre elles.

Avantageusement, le contenant comporte plusieurs tirants répartis autour de l'axe.

Dans ce cas, en particulier le contenant peut comporter trois tirants répartis suivant des angles de 120° autour de l'axe. Les trois tirants permettent un serrage équilibré entre les deux fonds.

Avantageusement, chaque tirant comporte un manchon axial reliant deux parties de ce tirant, présentant deux filetages inversés s'ajustant chacun sur une des parties. On réalise facilement une tension sur le tirant par une rotation du manchon.

Avantageusement, le contenant comporte un cerclage extérieur disposé dans le plan de l'équateur.

Avantageusement, chaque fond comporte une collerette extérieure prenant appui sur l'extrémité de l'ensemble des pièces de bois. Cette collerette extérieure permet de répartir la pression sur toutes les pièces de bois.

Dans ce cas, en particulier sur chaque pôle du contenant, l'extrémité des pièces de bois forme une couronne présentant une surface cylindrique intérieure, encadrée par deux faces parallèles transversales qui sont serrées axialement entre la collerette extérieure et une collerette intérieure du fond.

Avantageusement, au moins un fond comporte une trappe amovible ou un hublot.

Avantageusement, le contenant comporte des vis de serrage serrant deux faces latérales des pièces de bois entre elles, comprenant des pôles magnétiques permettant un entraînement par l'extérieur. On réalise de cette manière des vis entièrement intégrées dans le bois.

Avantageusement, chaque pièce de bois comporte sur une face latérale une rainure longitudinale recevant un joint d'étanchéité en appui sur la pièce de bois qui est juxtaposée.

L'invention a aussi pour objet un ensemble équipé d'un support et d'un contenant comprenant l'une quelconque des caractéristiques précédentes, comportant un pivot interposé entre le support et le contenant, présentant un axe passant par l'axe du contenant.

L'invention a de plus pour objet un procédé d'assemblage d'un contenant en bois comprenant l'une quelconque des caractéristiques précédentes, remarquable en ce qu'il comporte successivement une étape de formation d'un demi contenant avec les pièces de bois, puis de mise en place des deux fonds reliés par les tirants, puis de formation du deuxième demi contenant, et enfin de serrage complet des tirants.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue d'un contenant en bois sphérique selon l'invention ;
[Fig. 2] présente successivement deux douelles accolées de ce contenant, et l'extrémité d'une de ces douelles ;
[Fig. 3] présente successivement deux douelles accolées de ce contenant, et l'extrémité d'une de ces douelles ;
[Fig. 4] présente un fond d'extrémité du contenant ;
[Fig. 5] présente une première étape d'assemblage de la moitié de la sphère ;
[Fig. 6] présente une étape suivante d'assemblage des deux fonds avec leurs tirants sur la demi-sphère ; et
[Fig. 7] présente la sphère finie posée sur un support.

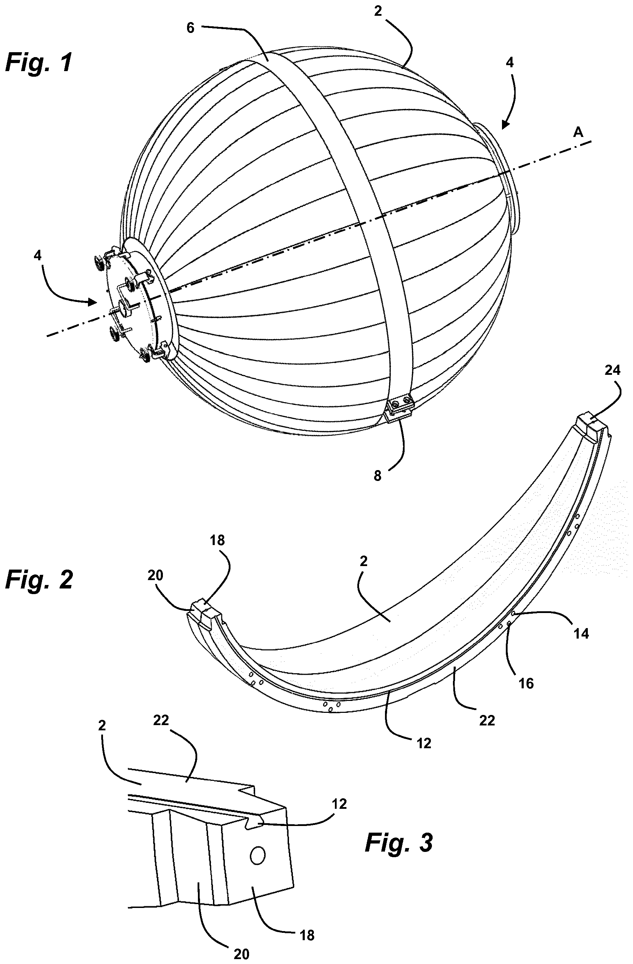

La figure 1 présente une sphère de vinification comportant autour d'un axe principal A une série de douelles identiques en bois 2, disposant d'une forme qui s'affine vers chaque pôle pour se terminer par un cercle ouvert centré sur l'axe, qui est fermé par un fond circulaire 4.

Un cerclage extérieur 6 formé par une bande de tôle métallique posée à plat sur les douelles 2, disposé suivant le plan de l'équateur, comporte deux demi-cercles dont les extrémités sont reliées entre elles par des liaisons 8 comprenant chacune deux vis de serrage disposées tangentiellement.

On applique avec ces liaisons 8 un serrage élevé du cerclage 6 sur les douelles 2, qui se répercute sur leurs faces latérales en appui les unes sur les autres, en particulier dans la partie proche de l'équateur.

Chaque fond 4 comporte une collerette extérieure 10 formant un plan transversal venant en appui sur les extrémités de toutes les douelles 2. Des tirants intérieurs parallèles à l'axe relient les deux fonds 4 en exerçant une traction entre eux, afin d'appliquer cette traction sur les extrémités des douelles 2, qui génère vers ces extrémités un serrage latéral de ces douelles les unes sur les autres.

Les figures 2 et 3 présentent chaque douelle 2 comprenant sur une de ses faces latérales 22, une rainure 12 le long de cette face latérale, venant près de sa surface intérieure. La rainure 12 reçoit un joint torique qui vient en appui sur la face latérale 22 de la douelle juxtaposée 2 ne comportant pas cette rainure, pour assurer l'étanchéité entre elles.

La face latérale de la douelle 22 comporte à l'extérieur de la rainure 12 quatre groupes de perçages répartis sur la longueur, comprenant pour chaque groupe deux perçages 14 proches de cette rainure recevant chacun un tourillon s'ajustant dans un perçage de la douelle juxtaposée 2 pour réaliser un alignement de ces douelles, et vers l'extérieur entre ces tourillons un perçage 16 recevant une vis de serrage sur la douelle juxtaposée.

Avantageusement la vis de serrage est une vis entièrement intégrée dans le bois suivant une direction tangentielle, comprenant plusieurs pôles magnétiques répartis autour de son axe, qui se visse dans un écrou fixé dans la face latérale 22 de la douelle 2 juxtaposée.

Un outil actionné par une perceuse comporte aussi plusieurs pôles magnétiques répartis autour de son axe de rotation. En positionnant l'outil parallèlement à l'axe de la vis intégrée, au plus près de cette vis, une rotation de cet outil entraîne en rotation par une attraction magnétique des pôles, la vis qui se visse alors dans l'écrou.

On obtient un serrage de l'extérieur ne laissant aucune trace sur la surface extérieure de la sphère, ce qui lui donne un bel aspect mettant en valeur le bois. Une rotation inverse de l'outil permet un desserrage des vis intégrées si on veut démonter le contenant, par exemple pour une rénovation.

Les extrémités des douelles 2 sont usinées de manière à former à chaque extrémité axiale de l'ensemble des douelles assemblées, une couronne 24 présentant un perçage centré sur l'axe A, comprenant une surface radialement intérieure cylindrique 18, encadrée par deux faces transversales planes parallèles 20.

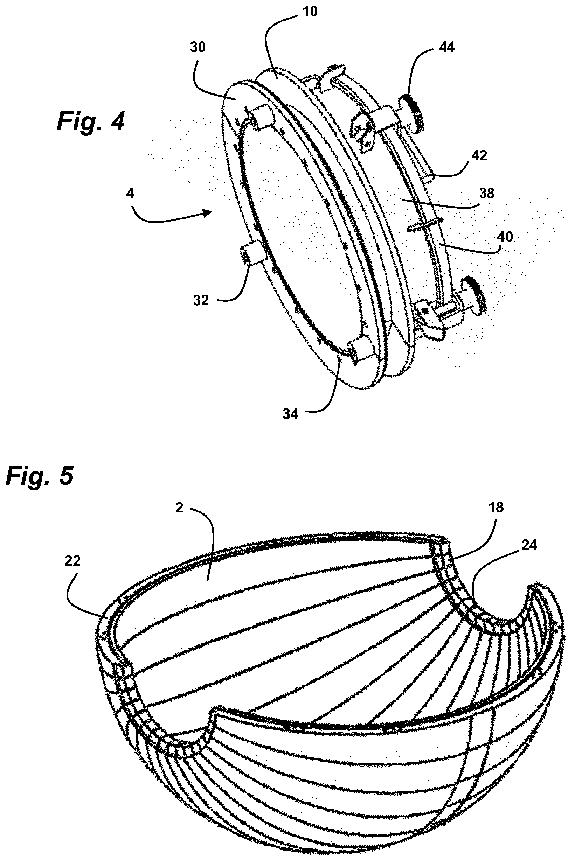

La figure 4 présente un fond 4 comportant une collerette intérieure 34 équipée d'une partie cylindrique axiale, venant sur le côté intérieur de la couronne d'extrémité des douelles 24, comprenant une série de perçages 34 recevant des vis de serrage ajustées dans la collerette extérieure 10 de manière à pincer fortement cette couronne pour assurer une étanchéité.

La collerette intérieure 34 comporte trois manchons fixes 32 répartis sur le contour et tournés vers l'intérieur de la sphère, présentant chacun un perçage taraudé parallèle à l'axe A, destiné à recevoir chacun un tirant.

La collerette extérieure 10 se prolonge par une partie cylindrique axiale 38 tournée vers l'extérieur, recevant la partie cylindrique de la collerette intérieure 30, se terminant par une trappe amovible de remplissage ou de visite 40 maintenue serrée sur cette partie cylindrique par quatre vis 44 fixées chacune par l'intermédiaire d'un pivot à cette partie cylindrique, afin d'assurer une étanchéité. La trappe 40 comporte deux crochets 42 permettant un accrochage pour réaliser une rotation de la sphère.

L'autre extrémité de la sphère comporte une collerette extérieure 10 identique, recevant un disque fixe qui est entièrement fermé.

En complément on peut disposer un hublot sur un fond 4 ou sur les deux, pour permettre une vision intérieure. On peut aussi réaliser une trappe 40 sur chaque fond 4, pour ouvrir le contenant des deux côtés.

Avantageusement les fonds sont réalisés dans un acier inoxydable, et les hublots transparents en verre ou en plexiglas alimentaire.

La figure 5 présente une première étape de fabrication du contenant, comportant l'assemblage de douelles 2 pour former la moitié de la sphère. On réalise un serrage magnétique des vis intégrées pour lier les douelles 2 entre elles.

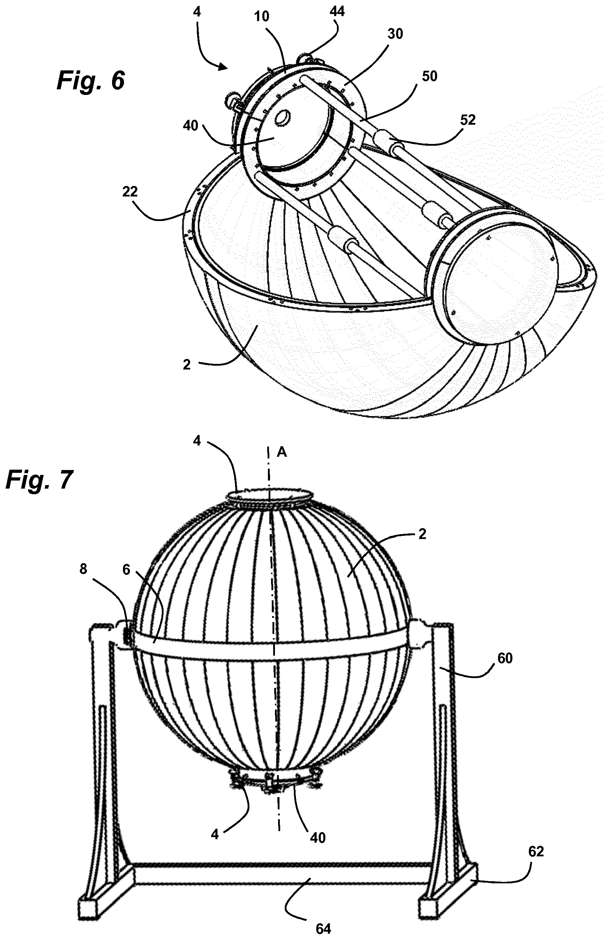

La figure 6 présente la mise en position des deux fonds 4, reliées par les trois tirants 50 formés chacun en deux parties liées entre elles par un manchon de serrage 50. Cet ensemble descend facilement sur la demi-sphère, en ajustant chaque couronne d'extrémité 18 dans la gorge circulaire formée entre la collerette intérieure 30 et la collerette extérieure 10 de chaque fond 4.

Avantageusement les extrémités juxtaposées des deux parties de chaque tyran 50 comportent un filetage inversé l'un par rapport à l'autre, se vissant dans le manchon de serrage 52, de manière à permettre par une rotation de ce manchon un resserrement des deux parties entraînant les deux fonds 4 l'un vers l'autre.

Les trois tirants 50 répartis suivant des angles 120° permettent d'équilibrer les forces de serrage entre les deux fonds 4.

On réalise ensuite la pose des douelles restantes 2 afin de compléter la sphère. On peut enfin en introduisant la main dans la sphère par la trappe 40 qui est ouverte, réaliser un serrage de chaque manchon 52 pour finir de tendre les tirants 50, et d'appliquer une pression latérale entre les douelles 2 plus proche des extrémités qui complète la pression appliquée par le cerclage 6 extérieur qui est plus proche du centre.

Ce principe de serrage est aussi intéressant pour toute forme proche de la sphère, présentant une courbure continue et un axe principal de symétrie A, avec un cerclage 6 central dans le plan de l'équateur.

La Figure 6 présente un support de la sphère, comprenant deux montants 60 dont les bases reposant chacune sur un pied 62, sont reliées entre elles par une barre transversale 64. L'extrémité supérieure de chaque montant est fixée à une liaison 8 du cerclage extérieur 6 de la sphère. En complément cette fixation peut former un pivot de manière à permettre une rotation de la sphère autour d'un axe horizontal.

Le support permet un stockage et une belle présentation du contenant sphérique.

La rotation de la sphère permet de remettre en suspension un dépôt comme une lie ou un marc se trouvant au fond du contenant, pour améliorer la préparation de la boisson. De plus les tirants intérieurs 50 facilitent le malaxage du contenant, en cassant notamment la peau en surface du liquide.

La trappe 40 permet pour du vin le chargement de la vendange, le décuvage et le travail du chapeau de marc pendant les fermentations, ainsi que la visualisation de l'intérieur de la sphère.

## Revendications

1. Contenant en bois notamment pour la maturation de boissons fermentées ou la fermentation de moûts sucrés, présentant une courbure continue et un axe principal de symétrie (A) définissant deux pôles, comprenant des pièces de bois (2) allongées suivant des plans méridiens, réparties autour de l'axe (A) et serrées entre elles par leurs faces latérales (22) pour assurer une étanchéité, **caractérisé en ce que** les pièces de bois (2) forment au niveau de chaque pôle un perçage centré sur l'axe (A) recevant chacun un fond (4), et **en ce que** les deux fonds (4) sont reliés entre eux par des tirants intérieurs au contenant (50).

2. Contenant en bois selon la revendication 1, **caractérisé en ce qu'**il comporte plusieurs tirants (50) répartis autour de l'axe (A).

3. Contenant en bois selon la revendication 2, **caractérisé en ce qu'**il comporte trois tirants (50) répartis suivant des angles de 120° autour de l'axe (A).

4. Contenant en bois selon l'une quelconque des revendications précédentes, **caractérisé en ce que** chaque tirant (50) comporte un manchon axial (52) reliant deux parties de ce tirant (50), présentant deux filetages inversés s'ajustant chacun sur une des parties.

5. Contenant en bois selon l'une quelconque des revendications précédentes, **caractérisé en ce qu'**il comporte un cerclage (6) extérieur disposé dans le plan de l'équateur.

6. Contenant en bois selon l'une quelconque des revendications précédentes, **caractérisé en ce que** chaque fond (4) comporte une collerette extérieure (10) prenant appui sur l'extrémité de l'ensemble des pièces de bois (2).

7. Contenant en bois selon la revendication 6, **caractérisé en ce que** sur chaque pôle du contenant, l'extrémité des pièces de bois (2) forme une couronne (24) présentant une surface cylindrique intérieure (18), encadrée par deux faces parallèles transversales (20) qui sont serrées axialement entre la collerette extérieure (10) et une collerette intérieure (30) du fond (4).

8. Contenant en bois selon l'une quelconque des revendications précédentes, **caractérisé en ce qu'**au moins un fond (4) comporte une trappe amovible (40) ou un hublot.

9. Contenant en bois selon l'une quelconque des revendications précédentes, **caractérisé en ce qu'**il comporte des vis de serrage serrant deux faces latérales (22) des pièces de bois (2) entre elles, comprenant des pôles magnétiques permettant un entraînement par l'extérieur.

10. Contenant en bois selon l'une quelconque des revendications précédentes, **caractérisé en ce que** chaque pièce de bois (2) comporte sur une face latérale (22) une rainure longitudinale recevant un joint d'étanchéité (12) en appui sur la pièce de bois (2) qui est juxtaposée.

11. Ensemble équipé d'un support et d'un contenant en bois selon l'une quelconque des revendications précédentes, **caractérisé en ce qu'**il comporte un pivot interposé entre le support et le contenant, présentant un axe passant par l'axe du contenant.

12. Procédé d'assemblage d'un contenant en bois selon l'une quelconque des revendications 1 à 10, **caractérisé en ce qu'**il comporte successivement une étape de formation d'un demi contenant avec les pièces de bois (2) allongées suivant des plans méridiens, puis de mise en place des deux fonds (4) reliés par les tirants (50), puis de formation du deuxième demi contenant, et enfin de serrage complet des tirants (50).

## Patentansprüche

1. Behälter aus Holz insbesondere für die Reifung fermentierter Getränke oder die Fermentierung süßer Moste, aufweisend eine kontinuierliche Krümmung und eine Hauptsymmetrieachse (A), die zwei Pole definiert, umfassend gemäß Meridianebenen längliche Holzteile (2), die um die Achse (A) verteilt und anhand ihrer Seitenflächen (22) miteinander verspannt sind, um eine Dichtigkeit zu sichern, **dadurch gekennzeichnet, dass** die Holzteile (2) im Bereich jedes Pols einen auf der Achse (A) zentrierten Durchbruch bilden, der jeweils einen Boden (4) aufnimmt, und dass die zwei Böden (4) durch zwei zum Behälter innere Stäbe (50) verbunden sind.

2. Behälter aus Holz nach Anspruch 1, **dadurch gekennzeichnet, dass** er mehrere Stäbe (50) aufweist, die um die Achse (A) verteilt sind.

3. Behälter aus Holz nach Anspruch 2, **dadurch gekennzeichnet, dass** er drei Stäbe (50) aufweist, die gemäß Winkeln von 120° um die Achse (A) verteilt sind.

4. Behälter aus Holz nach einem der vorangehenden Ansprüche, **dadurch gekennzeichnet, dass** jeder Stab (50) eine axiale Manschette (52) aufweist, die zwei Teile dieses Stabs (50) verbindet, aufweisend zwei umgekehrte Gewinde, die sich jeweils an einen der Teile anpassen.

5. Behälter aus Holz nach einem der vorangehenden Ansprüche, **dadurch gekennzeichnet, dass** er einen äußeren Reif (6) aufweist, der in der Ebene des Äquators angeordnet ist.

6. Behälter aus Holz nach einem der vorangehenden Ansprüche, **dadurch gekennzeichnet, dass** jeder Boden (4) einen äußeren Kragen (10) aufweist, der sich auf dem Ende der Anordnung der Holzteile (2) abstützt.

7. Behälter aus Holz nach Anspruch 6, **dadurch gekennzeichnet, dass** das Ende der Holzteile (2) auf jedem Pol des Behälters einen Kranz (24) bildet, der eine innere zylindrische Oberfläche (18) aufweist, die von zwei transversalen parallelen Flächen (20) umrahmt ist, die axial zwischen dem äußeren Kragen (10) und einem inneren Kragen (30) des Bodens (4) eingespannt sind.

8. Behälter aus Holz nach einem der vorangehenden Ansprüche, **dadurch gekennzeichnet, dass** mindestens ein Boden (4) eine bewegliche Klappe (40) oder ein Bullauge aufweist.

9. Behälter aus Holz nach einem der vorangehenden Ansprüche, **dadurch gekennzeichnet, dass** er Spannschrauben aufweist, die zwei seitliche Flächen (22) der Holzteile (2) untereinander verspannen, umfassend Magnetpole, die einen Antrieb von außen erlauben.

10. Behälter aus Holz nach einem der vorangehenden Ansprüche, **dadurch gekennzeichnet, dass** jedes Holzteil (2) auf einer seitlichen Fläche (22) eine längliche Rille aufweist, die eine Dichtung (12) aufnimmt, die sich auf dem benachbarten Holzteil (2) abstützt.

11. Anordnung, ausgestattet mit einem Ständer und einem Behälter aus Holz nach einem der vorangehenden Ansprüche, **dadurch gekennzeichnet, dass** sie einen Drehzapfen zwischen dem Ständer und dem Behälter aufweist, aufweisend eine Achse, die durch die Achse des Behälters verläuft.

12. Verfahren zum Zusammenbauen eines Behälters aus Holz nach einem der Ansprüche 1 bis 10, **dadurch gekennzeichnet, dass** es schrittweise einen Schritt des Bildens eines halben Behälters mit den Holzteilen (2), dann des Platzierens der zwei durch die Stäbe (50) verbundenen Böden (4), dann des Bildens des zweiten halben Behälters und schließlich das vollständige Spannen der Stäbe (50) aufweist.

## Claims

1. A wooden container, in particular for the maturation of fermented drinks or the fermentation of sweet musts, having a continuous curvature and a main axis of symmetry (A) defining two poles, comprising wood pieces (2) elongated along meridian planes, distributed about the axis (A) and clamped together by their lateral faces (22) to ensure a seal, **characterized in that** the wood pieces (2) form at each pole a hole centered on the axis (A) each receiving a bottom (4), and **in that** the two funds (4) are interconnected by tie rods inside the container (50).

2. The wooden container according to claim 1, **characterized in that** it includes several tie rods (50) distributed about the axis (A).

3. The wooden container according to claim 2, **characterized in that** it includes three tie rods (50) distributed at angles of 120° about the axis (A).

4. The wooden container according to any one of the preceding claims, **characterized in that** each tie rod (50) includes an axial sleeve (52) connecting two portions of this tie rod (50), having two inverted threads each fitting on one of the portions.

5. The wooden container according to any one of the preceding claims, **characterized in that** it includes an external strapping (6) disposed in the plane of the equator.

6. The wooden container according to any one of the preceding claims, **characterized in that** each bottom (4) includes an external flange (10) bearing on the end of all the wood pieces (2).

7. The wooden container according to claim 6, **characterized in that** on each pole of the container, the end of the wood pieces (2) forms a crown (24) having an internal cylindrical surface (18), framed by two transverse parallel faces (20) which are axially clamped between the external flange (10) and an internal flange (30) of the bottom (4).

8. The wooden container according to any one of the preceding claims, **characterized in that** at least one bottom (4) includes a removable hatch (40) or a window.

9. The wooden container according to any one of the preceding claims, **characterized in that** it includes clamping screws clamping two lateral faces (22) of the wood pieces (2) between them, comprising magnetic poles allowing a drive by the outside.

10. The wooden container according to any one of the preceding claims, **characterized in that** each wood piece (2) includes on a lateral face (22) a longitudinal groove receiving a sealing joint (12) bearing on the wood piece (2) which is juxtaposed.

11. An assembly equipped with a support and a wooden container according to any one of the preceding claims, **characterized in that** it includes a pivot interposed between the support and the container, having an axis passing through the axis of the container.

12. A method for assembling a wooden container according to any one of claims 1 to 10, **characterized in that** it successively includes a step of forming a half container with the wood pieces (2) elongated according to meridian planes, then of placing the two bottoms (4) connected by the tie rods (50), then of forming the second half container, and finally of complete clamping the tie rods (50).
